# DEMANDE DE BREVET EUROPEEN

(11) **EP 1 596 639 A1**
(43) Date de publication de la demande: **16.11.2005**
(21) Numéro de dépôt: 05354016.7
(22) Date de dépôt: 22.03.2005
(51) Int. Cl.: H05B 37/02

(54) **Dispositif et procédé de balisage et installation comportant un tel dispositif**

(30) Priorité: 28.04.2004 FR 0404515
(71) Demandeur: SCHNEIDER ELECTRIC INDUSTRIES SAS, 92500 Rueil-Malmaison (FR)
(72) Inventeur: Lovato, Jean-Louis, Schneider Electric Ind. SAS, 38050 Grenoble Cedex 09 (FR); Collomb, Virginie, Schneider Electric Ind. SAS, 38050 Grenoble Cedex 09 (FR); Minier, Vincent, Schneider Electric Ind. SAS, 38050 Grenoble Cedex 09 (FR)
(74) Mandataire: Tripodi, Paul

(57) **Abrégé**

Le dispositif de balisage comportant une source lumineuse (10) et un circuit de traitement (11) pour commander l'éclairage de ladite source lumineuse. Ledit dispositif comporte une communication optique (20, 21, 22, 23, 61, 63) ayant au moins un émetteur optique (20, 21) et/ou un récepteur optique (22, 23) connectés au circuit de traitement (11). Un détecteur (25) détecte la présence, le déplacement ou le passage d'un objet (42, 52). Ledit détecteur est connecté au circuit de traitement pour commander la communication optique (20, 21) en fonction de signaux fournis par ledit détecteur. Une installation de balisage comporte des dispositifs de balisage disposés par exemple sur un tronçon de piste pour aéroport pour le guidage d'appareils, ou sur un tronçon (51) de route pour effectuer une signalisation routière. Le procédé de balisage permet d'allumer les dispositifs de balisage par voie optique en fonction de détections.

## Description

### DOMAINE TECHNIQUE

L'invention concerne un dispositif de balisage comportant une source lumineuse et un circuit de traitement pour commander l'éclairage de ladite source lumineuse. L'invention concerne aussi un procédé de balisage. L'invention concerne aussi une installation de balisage pour aéroport ou aérodrome comportant au moins deux dispositifs de balisage disposés sur un tronçon de piste pour le guidage d'appareils. L'invention concerne aussi une installation de balisage pour circuit routier comportant au moins deux dispositifs de balisage disposés sur un tronçon de route pour effectuer une signalisation routière

### ETAT DE LA TECHNIQUE

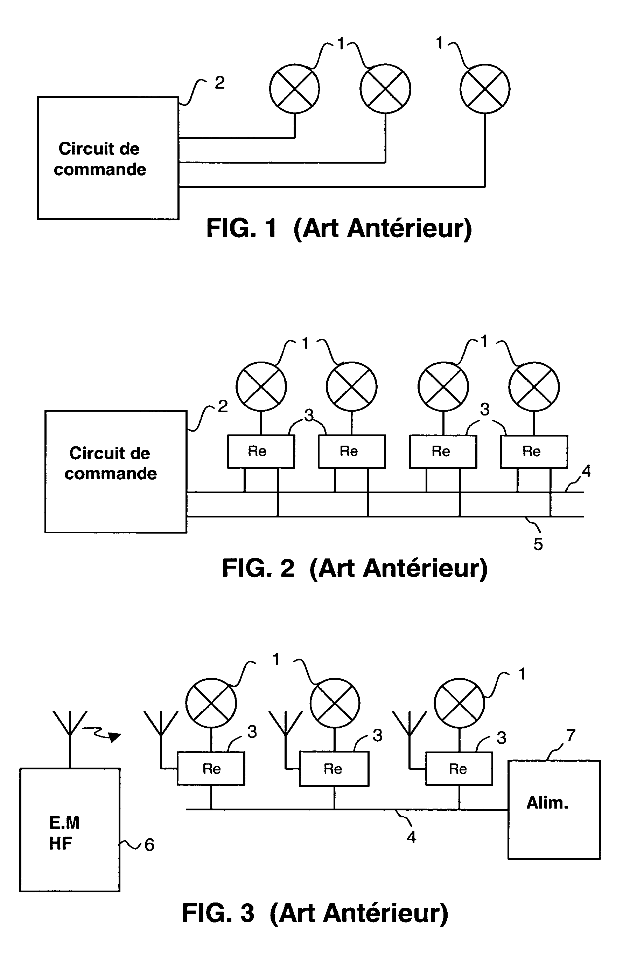

Les dispositifs de balisage sont utilisés, notamment, pour guider des aéronefs sur des tronçons de pistes dans des aéroports ou des véhicules sur des circuits routiers. Comme représentés sur le schéma de la figure 1, les dispositifs de balisage de l'état de la technique comportent généralement des balises d'éclairage ou lampes 1 commandées individuellement, en groupe, simultanément ou séquentiellement par un circuit électrique de commande 2.

Dans des systèmes plus complexes, représentés sur la figure 2, les balises 1 sont commandées à travers des modules de réceptions de signaux de télécommande 3. Dans ce cas, les balises et les modules 3 sont reliées au circuit de commande par une ligne d'alimentation 4 fournissant l'énergie électrique et par une ligne de télécommande 5. la ligne de commande peut être par exemple un bus de réseau informatique ou un bus de terrain. Les modules de réception décodent les signaux de commande et actionnent par exemple un relais connecté à la ligne 4 pour alimenter les balises qui allument alors une source lumineuse. Dans l'exemple de la figure 3, les modules de réceptions de signaux de télécommande 3 sont reliés par ondes radio à un dispositif de télécommande comportant un émetteur 6 haute fréquence. Les modules 3 comportent des récepteurs haute fréquence recevant des ondes radio. La ligne 4 est connectée à une alimentation électrique 7 pouvant être un réseau de distribution électrique.

Lorsque des installations de balises existantes fonctionnent selon un mode défini déjà câblé, le changement de mode de fonctionnement nécessite souvent une réinstallation de l'ensemble des balises. Par exemple, des balises installées pour être commandés en mode groupé peuvent difficilement être commandées en mode séquentiel ou en mode individuel par télécommande sans modification de l'installation. En effet, de telles modifications impliquent l'ajout ou l'installation d'un bus de télécommande comme celui de la figure 2.

Pour palier, aux problèmes de modification de l'installation il est possible de d'utiliser des balises commandées par ondes haute fréquence comme sur l'installation de la figure 3. cependant dans certaines installations en zones sensibles, notamment dans des aéroports, des télécommandes par ondes radio sont indésirables ou interdites.

De plus, les balises de l'état de la technique ont un fonctionnement passif par rapport aux objets, aux véhicules, ou aux aéronefs pour lesquels elles doivent baliser le chemin ou effectuer une signalisation particulière.

### EXPOSE DE L'INVENTION

L'invention a pour but un dispositif de balisage pouvant être facilement installé ou remplacé et/ou ayant un fonctionnement dynamique, un procédé de balisage pour des dispositifs de balisage, et une installation comportant au moins un tel dispositif de balisage.

Un dispositif de balisage selon l'invention comporte :
- des moyens de communication optique ayant au moins un émetteur optique, et
- des moyens de détection pour détecter la présence, le déplacement ou le passage d'un objet, ledit dispositif de détection étant connecté au circuit de traitement pour commander les moyens de communication optique en fonction de signaux fournis par lesdits moyens de détection,
ledit au moins un émetteur optique émettant un signal optique de commande d'éclairage vers un autre dispositif de balisage lorsqu'un signal de détection est fournit audit circuit de traitement.

De préférence, les moyens de communication comportent un récepteur optique pour recevoir un signal de commande d'éclairage émis par un autre dispositif de balisage.

De préférence, les moyens de détection comportent un photo-détecteur ou une diode réceptrice pour détecter un signal lumineux de réflexion d'une lumière émise par la source lumineuse.

Avantageusement, les moyens de communication optiques comportent des récepteurs optiques et des moyens de filtrage et/ou des moyens de codage pour filtrer et/ou coder des signaux de communication optique.

Dans un mode de réalisation préférentiel, la source lumineuse comporte des diodes électroluminescentes pour l'éclairage du dispositif de balisage, les moyens de détection détectant un signal de réflexion d'une lumière émise par les diodes électroluminescentes, le circuit de traitement effectuant un codage de la source lumineuse et/ou une reconnaissance de signaux représentatifs de signaux lumineux reçus par les moyens de détection.

Par exemple, la source lumineuse comporte des diodes électroluminescentes émettant dans une première couleur et des diodes électroluminescentes émettant dans une seconde couleur pour modifier la couleur de la lumière de ladite source lumineuse.

Dans un mode de réalisation particulier, le dispositif comporte des diodes électroluminescentes connectées à des moyens de modulation pour émettre des signaux de communication optique vers d'autres dispositifs de balisage, lesdites diodes électroluminescentes émettant de la lumière de balisage en tant que source lumineuse et des signaux optiques de communication.

Avantageusement, le circuit de traitement comporte des moyens d'évaluation de vitesse d'un objet entre deux dispositifs de balisage.

Avantageusement, le circuit de traitement comporte des moyens d'évaluation de distance entre deux objets détectés par des dispositifs de balisage.

Avantageusement, le circuit de traitement traite des informations des moyens de détection et centralise des informations reçus par les moyens de communication optiques.

De préférence, le circuit de traitement traite des informations des moyens de détection et commande les moyens de communication pour émettre des signaux optiques de commande d'allumage d'au moins un autre dispositif de balisage lorsqu'il y a une détection.

Avantageusement, le circuit de traitement comporte des moyens de transfert pour recevoir des premiers signaux de communication optiques depuis un premier autre dispositif de balisage et envoyer des informations contenues dans les signaux reçus à un second autre dispositif de balisage par une communication optique.

De préférence, le circuit de traitement traite des informations de signaux reçus par les moyens de communication optiques et commande l'allumage de la source lumineuse si lesdits signaux comportent des informations de commande de la source lumineuse.

De préférence, le circuit de traitement commande l'arrêt de l'allumage de la source lumineuse après la fin de détection par les moyens de détection.

Dans des modes de réalisation particuliers, le dispositif de balisage comporte une source d'énergie autonome, des moyens de commande d'un actionneur et/ou au moins un capteur d'environnement.

Selon un mode de réalisation de l'invention, une installation de balisage pour aéroport ou aérodrome, comportant au moins deux dispositifs de balisage disposés sur un tronçon de piste pour le guidage d'appareils, comporte des dispositifs de balisage tels que définis ci-dessus communicant par voie optique, les moyens de détection desdits dispositifs de balisage étant aptes à détecter des aéronefs.

Dans un mode de réalisation préférentiel, au moins un dispositif de balisage détectant la présence d'un aéronef émet des signaux optiques de commande à au moins un dispositif de balisage suivant pour commander l'allumage de la source lumineuse d'au moins un dispositif de balisage suivant.

Selon un mode de réalisation de l'invention, une installation de balisage pour circuit routier, comportant au moins deux dispositifs de balisage disposés sur un tronçon de route pour effectuer une signalisation routière, comporte des dispositifs de balisage tels que définis ci-dessus communicant par voie optique, les moyens de détection desdits dispositifs de balisage étant aptes à détecter des véhicules automobiles.

Dans un mode de réalisation préférentiel, au moins un dispositif de balisage détectant la présence ou le passage d'un véhicule émet des signaux optiques de commande à au moins un dispositif de balisage suivant pour commander l'allumage de la source lumineuse d'au moins un dispositif de balisage suivant.

Avantageusement, au moins un dispositif de balisage comporte un circuit de traitement avec des moyens d'évaluation de vitesse d'un véhicule entre deux dispositifs de balisage et fournit des signaux de détection de dépassement de vitesse si une valeur de vitesse évaluée dépasse une valeur limite de vitesse prédéterminée.

Avantageusement, au moins un dispositif de balisage comporte un circuit de traitement avec des moyens d'évaluation de distance entre deux véhicules en fonction de signaux de détection fournis par ses moyens de détection et/ou en fonction de signaux de détection fournis par d'autres dispositifs de balisage et fournit des signaux de dépassement de distance si une valeur de distance évaluée dépasse une valeur limite de distance prédéterminée.

De préférence, au moins un dispositif de balisage comporte des moyens de commande de la source de lumière pour un éclairement spécifique lorsque ledit dispositif de balisage détecte ou reçoit des signaux représentatifs de dépassent de vitesse ou de distance.

De préférence, au moins un dispositif de balisage reçoit, émet et utilise dans son circuit de traitement des signaux de sécurité, lesdits signaux de sécurité pouvant déclencher la commande de la source de lumière pour un éclairement spécifique.

Un procédé de balisage selon l'invention comporte :
- une étape d'allumage d'une source lumineuse commandée par la réception d'un signal lumineux de commande émis par un dispositif de balisage précédant,
- une étape de détection pour détecter le passage ou la présence d'un objet destiné à être détecté,
- une étape de communication d'un signal lumineux de détection ou de commande d'allumage à au moins un dispositif de balisage suivant, et
- une étape de fin de commande d'allumage de ladite source lumineuse lorsque la détection est terminée.

### BREVE DESCRIPTION DES DESSINS

D'autres avantages et caractéristiques ressortiront plus clairement de la description qui va suivre, de modes particuliers de réalisation de l'invention, donnés à titre d'exemples non limitatifs, et représentés aux dessins annexés sur lesquels :
- les figures 1, 2 et 3 représentent des schémas d'installations de balises de l'art antérieur
- la figure 4 représente un dispositif de balisage selon un premier mode de réalisation de l'invention,
- la figure 5 représente un schéma d'un dispositif de balisage selon un second mode de réalisation de l'invention,
- la figure 6 représente un schéma d'un dispositif de balisage selon un troisième mode de réalisation de l'invention,
- la figure 7 représente un schéma d'un dispositif de balisage selon un quatrième mode de réalisation de l'invention,
- la figure 8 représente une installation d'un tronçon de piste d'aéroport avec des dispositifs selon l'invention,
- les figures 9, 10 et 11 représentent des communications optiques entre des dispositifs de balisage selon des modes de réalisation de l'invention ;
- la figure 12 représente une installation d'un circuit routier avec des dispositifs selon l'invention,
- la figure 13 représente un schéma d'un dispositif de balisage selon un mode de réalisation de l'invention adapté au balisage d'un circuit routier,
- la figure 14 représente un organigramme d'un procédé de balisage selon un mode de réalisation de l'invention.

### DESCRIPTION DETAILLEE DE MODES DE REALISATION PREFERES

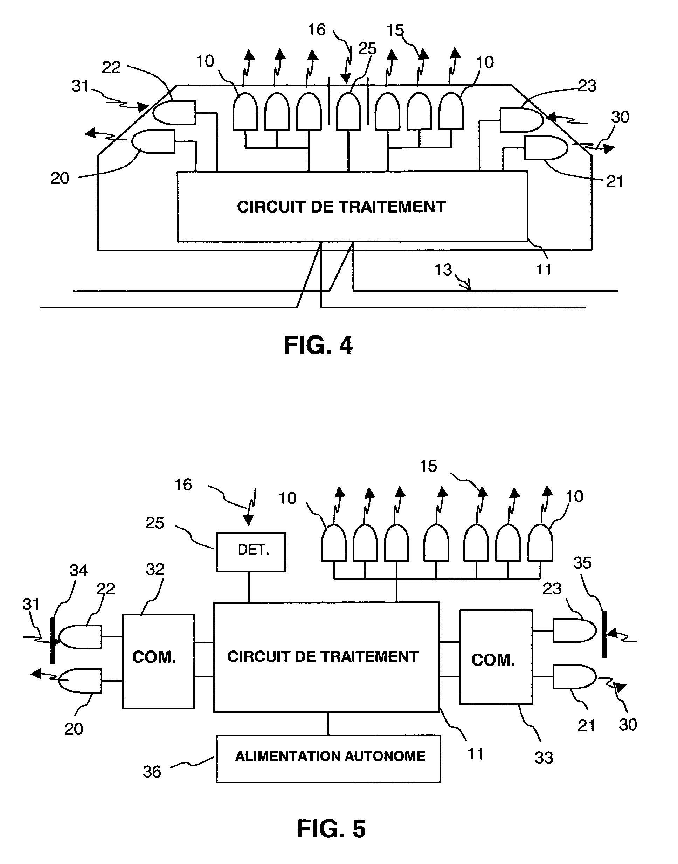

Un dispositif de balisage représenté sur la figure 4 comporte une source lumineuse 10 commandée par un circuit de traitement 11. Pour commander l'éclairage de ladite source lumineuse, le circuit de traitement reçoit une énergie électrique fournie par une ligne d'alimentation 13. Selon un mode de réalisation de l'invention, le dispositif de balisage comprend des moyens de communication et des moyens de détection connectés au circuit de traitement.

Les moyens de communication sont représentés par des émetteurs tels que des diodes émettrices 20 et 21 et des récepteurs tels que des diodes réceptrices 22 et 23 connectées au circuit de traitement 11. La diode de réception 22 peut recevoir un signal de commande d'allumage de la source lumineuse fourni par un autre dispositif de balisage. Par exemple, un signal de commande d'éclairage peut être émis par un dispositif de balisage précédant dans une installation prévue pour des allumages séquentiels des dispositifs de balisage.

Les moyens de détection permettent de détecter la présence, le déplacement ou le passage d'un objet. Ils sont représentés par un détecteur optique tel qu'une diode 25, ou un photo-détecteur, connectée au circuit de traitement pour fournir un signal de détection au circuit de traitement. Ainsi, le circuit de traitement 11 commande les moyens de communication optique en particulier un émetteur 21 en fonction d'un signal fourni par ledit détecteur optique 25. Le détecteur 25 détecte une lumière 16 correspondant à la réflexion sur un objet tel qu'un aéronef ou un véhicule d'une lumière 15 émise par la source lumineuse 10.

Les dispositifs selon des modes de réalisation de l'invention communiquent entre eux par des signaux optiques. Ainsi, lorsqu'un premier dispositif de balisage détecte le passage d'un objet par réflexion de lumière, les moyens de communication optiques, en particulier l'émetteur 21, sont commandés pour émettre un signal optique 30 à un second dispositif de balisage pour commander l'éclairage de sa source de lumineuse 10. Le dispositif peut recevoir aussi un signal optique de commande sur son récepteur 22 pour recevoir un signal optique de commande 31 destiné à commander l'éclairage de la source lumineuse10. Dans un cas particulier de réalisation à communication unidirectionnelle, le dispositif de balisage peut ne comporter qu'un récepteur 22 et qu'un émetteur 21 pour un allumage séquentiel. Dans d'autres dispositifs de balisage selon d'autres modes de réalisation, les communications entre dispositifs peuvent se faire de manière bidirectionnelle.

De tels dispositifs de balisage peuvent facilement remplacer des balises anciennes sans nécessiter d'installations supplémentaires de fils de commande ou de bus entre les balises. De plus, ses dispositifs de balisages n'ont pas de système radio perturbateur de l'environnement électromagnétique.

Sur le schéma de la figure 5, les moyens de communication comportent aussi des modules 32 et 33 de codage et/ou de décodage pour coder ou décoder les signaux reçus ou émis par les récepteurs optiques 22, 23 ou les émetteurs optiques 20 et 21. Afin d'améliorer la communication et assurer un bon fonctionnement de la réception de signaux optique de communication, des filtres optiques 34 et 35 sont disposés devant les récepteurs optiques respectivement 22 et 23. Par exemple, des filtres 34 et 35 en infrarouge permettent une bonne communication en infrarouge en évitant la saturation des récepteurs. Les modules 32 et 33 permettent une communication fiable puisque le codage des informations permet de reconnaître les dispositifs de balisage émetteurs et/ou récepteurs.

Le dispositif de la figure 5 peut comporter une source d'énergie autonome par exemple des batteries ou des cellules à énergie solaire. Ainsi, pour certaines applications, des liaisons à une alimentation par réseau électrique ne sont plus nécessaires, les liaisons de communication ou de télécommande se faisant par voie optique.

Avantageusement, la source lumineuse 10 comporte des diodes électroluminescentes pour l'éclairage du dispositif de balisage. La commande de la source peut aussi être codée par le circuit de traitement 11 pour être reconnue lors de la détection. Un tel codage permet de rejeter lors de la détection les éclairages produits par d'autres sources lumineuses. Dans ce cas, les détecteurs reçoivent des signaux lors de la réflexion d'une lumière émise par les diodes électroluminescentes, puis le circuit de traitement reconnaît les signaux codés pour déclencher une détection.

Dans des modes de réalisation de l'invention, le circuit de traitement traite des informations représentatives de la détection et des informations reçues par au moins un récepteur de communication optique. Lorsqu'une détection à été effectuée, il commande aussi au moins un émetteur de communication pour émettre des signaux optiques de commande d'allumage d'au moins un autre dispositif de balisage. Le circuit de traitement traite des informations des signaux reçus par au moins un récepteur optique et commande l'allumage de la source lumineuse si lesdits signaux comportent des informations de commande de la source lumineuse. Dès qu'une détection est terminée, le circuit de traitement commande l'arrêt de l'allumage de la source lumineuse. La commande d'arrêt d'allumage de la source lumineuse peut se faire immédiatement ou après un délai prédéterminé.

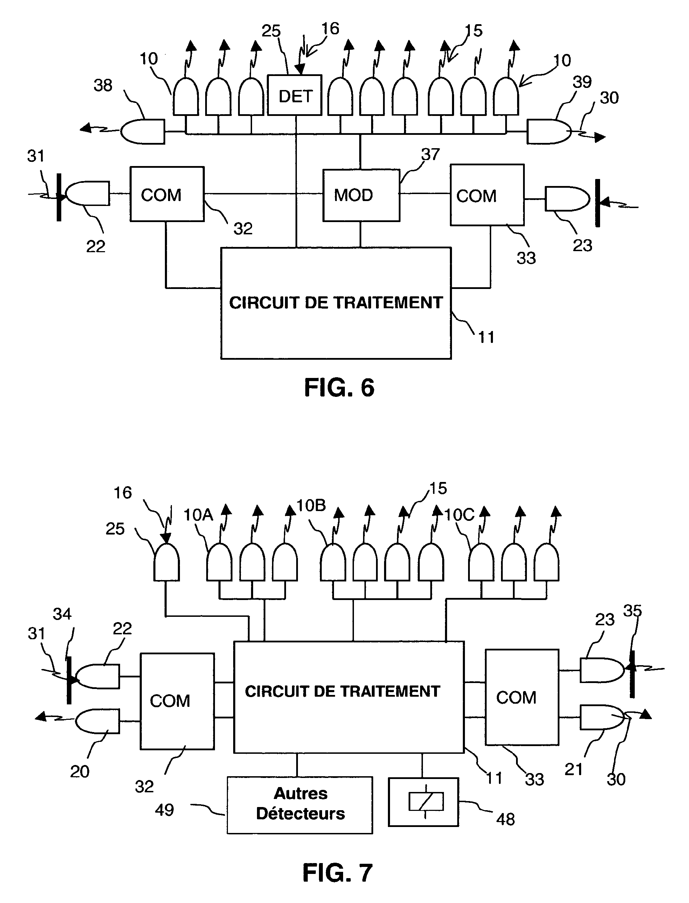

Dans un mode de réalisation représenté sur la figure 6, le dispositif de balisage émet des signaux de commande vers un autre dispositif avec la lumière de la source lumineuse. Dans ce cas, un circuit de modulation 37 module la commande des diodes électroluminescentes de la source lumineuse en fonction de signaux de commande à envoyer à un autre dispositif. La source lumineuse peut avoir des diodes 38 et/ou 39 dirigées vers d'autres dispositifs. Les diodes 38 et 39 peuvent aussi avoir des couleurs ou des longueurs d'ondes différentes des autres diodes 10 de la source de lumière. Le circuit de traitement 11 peut coder de manière différente la lumière 15 de la source lumineuse 10 pour la détection, ou pour communiquer avec un autre premier dispositif et/ou avec un autre second dispositif.

Dans un mode de réalisation représenté sur la figure 7, le dispositif de balisage peut émettre une source lumineuse de différentes couleurs pour différents signalements. Par exemple la source de lumière 10 peut comporter des premières diodes 10A éclairant dans une première couleur, des secondes diodes 10B éclairant dans une seconde couleur et éventuellement des troisièmes diodes 10C éclairant dans une troisième couleur. La couleur de la source lumineuse peut aussi être réalisée par une combinaison des couleurs de lumière de diodes différentes.

Sur le schéma de la figure 7, le dispositif de balisage peut aussi comporter des moyens de commande d'un actionneur 48. Cet actionneur peut être par exemple un relais, un voyant mécanique ou une barrière électrique. Le dispositif de balisage peut aussi comporter au moins un capteur de d'environnement 49. Le capteur d'environnement peut être notamment un capteur de température, un capteur de luminosité, un capteur de pression ou un capteur d'humidité.

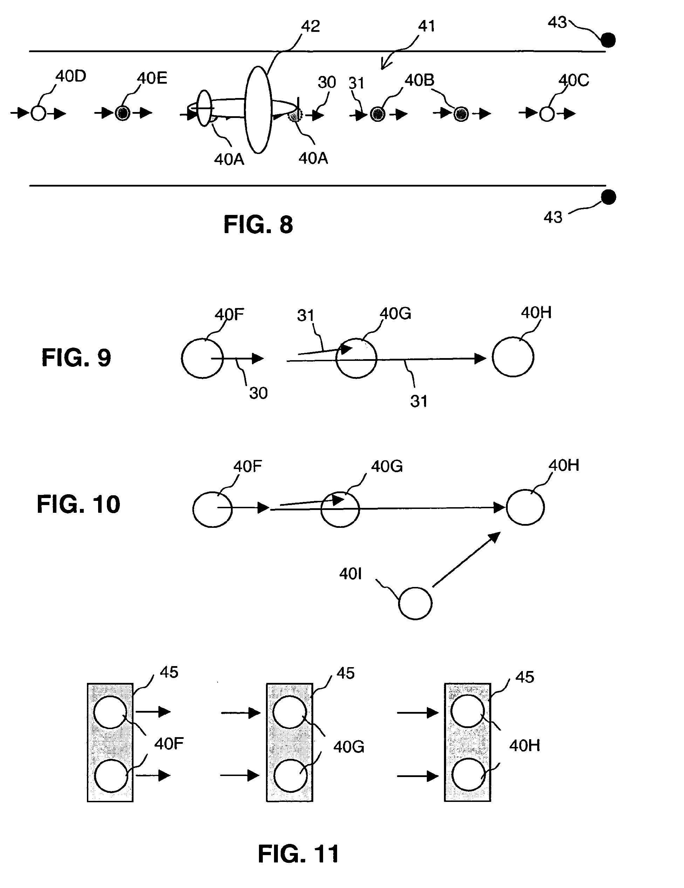

La figure 8 représente une installation de balisage pour aéroport ou aérodrome comportant des dispositifs de balisage 40A à 40E disposés sur un tronçon 41 de piste pour le guidage d'appareils 42. Des dispositifs sont tels que définis ci-dessus avec des communications par voie optique. Dans ce mode de réalisation, les détecteurs sont aptes à détecter des aéronefs. Ainsi, un dispositif de balisage détectant la présence d'un aéronef émet des signaux optiques 30 de commande à au moins un dispositif de balisage suivant pour commander l'allumage de la source lumineuse d'au moins un dispositif balisage suivant. Le signal 30 émis par un dispositif correspond à un signal 31 reçu par un autre dispositif.

Dans l'installation représentée sur la figure 8, des dispositifs de balisage 40A sont en détection de passage ou de présence d'un avion, et émettent vers des dispositifs de balisages suivants 40B des signaux optiques 30 de d'allumage de source lumineuse. Les dispositifs de balisages suivants 40B éclairent le tracé de la piste pour guider l'avion 42 mais le dispositif 40C plus éloigné ne reçoit pas de signaux d'allumage 31 le concernant, sa source lumineuse 10 reste éteinte. Après le passage de l'avion, un dispositif de balisage 40D a éteint sa source lumineuse 10 et un dispositif de balisage 40E est en attente d'extinction de sa source lumineuse 10 après un délai prédéterminé. Des dispositifs de balisage 43 de fin de piste peuvent éclairer avec une source lumineuse 10 de couleur différente, par exemple de couleur rouge pour indiquer un arrêt de l'appareil 42.

Les figures 9, 10 et 11 montrent les incidences et les communications de différents dispositifs de balisages installés dans des lieux assez proches. Sur la figure 9, un premier dispositif de balisage 40F émet des signaux de commande optiques vers un second dispositif de balisage 40G et un troisième dispositif de balisage 40H. Si les dispositifs 40G et 40H sont alignés un seul faisceau optique de communication peut être suffisant. Avantageusement, les signaux de communication optique sont codés pour être reconnus par les circuits de traitement des dispositifs de balisage. Ainsi dans l'exemple de la figure 10, le dispositif de balisage reconnaître et accepte les commandes provenant des dispositifs de balisages 40F et 40G mais rejette les commandes venant d'un autre dispositif 40I qui ne fait pas partie du même groupe de balisage. Sur la figure 11, des dispositifs de balisage sont installés par groupes 45 de redondance pour améliorer la fiabilité de la détection et de la transmission de signaux de commande optiques.

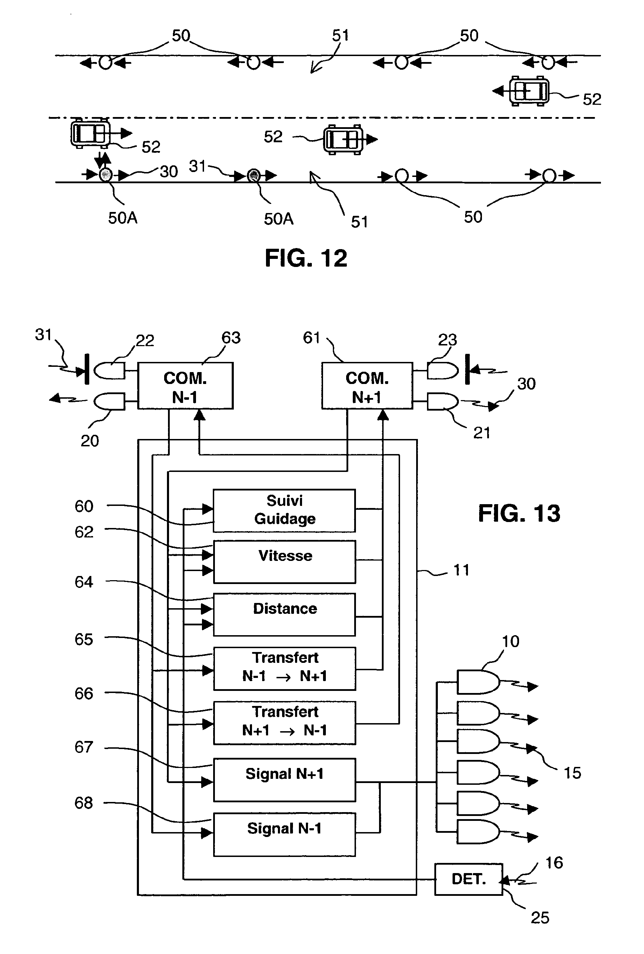

La figure 12 représente une installation de balisage pour circuit routier comportant des dispositifs de balisage 50, 50A, 50B disposés sur un tronçon 51 de route pour effectuer une signalisation routière. Des dispositifs sont tels que définis ci-dessus avec des communications par voie optique. Dans ce mode de réalisation, les détecteurs sont aptes à détecter des véhicules automobiles 52. Ainsi, un dispositif de balisage 50A détectant la présence d'un véhicule 52 émet des signaux optiques de commande à au moins un dispositif de balisage suivant 50B pour commander l'allumage de la source lumineuse d'au moins un dispositif de balisage suivant 50B.

Un dispositif de balisage selon un mode de réalisation adapté notamment à une installation pour circuit routier est représenté sur la figure 13. Le circuit de traitement 11 comporte un module 60 de suivi de guidage pour allumer successivement des dispositifs de balisage en fonction du déplacement d'un véhicule. Le module 60 reçoit un signal de détection du détecteur 25 et envoie un signal de commande à un dispositif suivant ou N+1 à travers le circuit de communication et de codage et/ou décodage 61 et l'émetteur optique 21.

Le circuit de traitement 11 comporte avantageusement un module 62 d'évaluation de vitesse d'un véhicule entre deux dispositifs de balisage et fournit des signaux de détection de dépassement de vitesse si une valeur de vitesse évaluée dépasse une valeur limite de vitesse prédéterminée. Le module 62 reçoit un signal de détection du détecteur 25 et un signal de commande ou de passage d'un dispositif de balisage précédant ou N-1 à travers un circuit de communication et de codage et/ou décodage 63 et le récepteur optique 22. Puis, il détermine la vitesse du véhicule et envoie un signal de commande à un dispositif de balisage suivant. Le circuit de traitement 11 peut comporter aussi un module 64 d'évaluation de distance entre deux véhicules en fonction de signaux de détection fournis par ses moyens de détection et/ou en fonction de signaux de détection fournis par d'autres dispositifs de balisage et fournit des signaux de dépassement de distance si une valeur de distance évaluée dépasse une valeur limite de distance prédéterminée.

Dans le mode de réalisation de la figure 13, le circuit de traitement comporte un module 65 pour transférer par voie optique des signaux de commande venant d'un dispositif précédant N-1 vers un dispositif suivant N+1, et un module 66 pour transférer par voie optique des signaux de commande venant d'un dispositif suivant N+1 vers un dispositif précédant N-1. De tels transferts peuvent aussi servir au contrôle de toute la chaîne des dispositifs de balisage.

Le circuit de traitement peut commander la source de lumière lorsque les modules du dispositif de balisage détectent ou reçoivent des signaux représentatifs de dépassement de vitesse ou distance. Un dispositif de balisage peut recevoir, émettre ou utiliser dans son circuit de traitement des signaux de sécurité. Un allumage de sécurité peut être un allumage clignotant à une fréquence particulière ou un allumage à une couleur différente.

Pour commander un allumage normal ou un allumage de sécurité le circuit de traitement comporte des modules 67 et 68 pour recevoir des signaux optiques d'un dispositif de balisage précédant N-1 ou d'un dispositif de balisage suivant N+1.

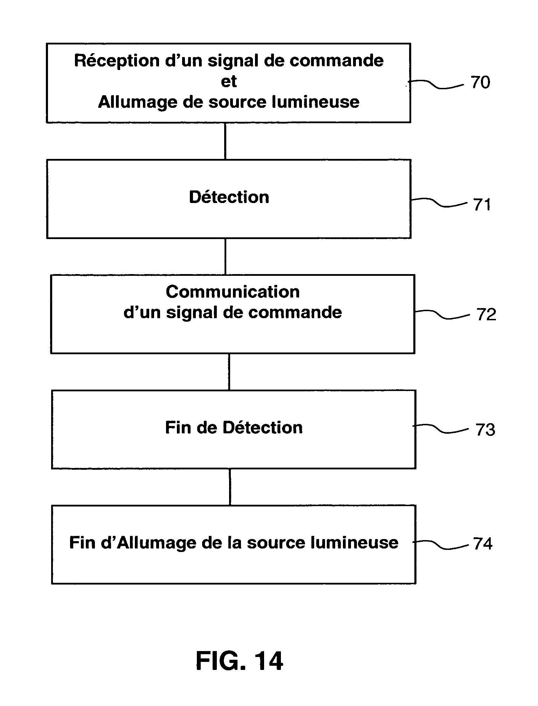

La figure 14 montre un mode de réalisation d'un organigramme d'un procédé de balisage. Dans une étape 70, l'allumage d'une source lumineuse est commandée par la réception d'un signal lumineux de commande émis par un dispositif de balisage précédent. Puis à une étape de détection 71, il est prévu la détection d'un passage ou de la présence d'un objet destiné à être détecté, par exemple un aéronef ou un véhicule. Suite à la détection, une étape 72 de communication permet d'envoyer un signal lumineux de détection ou de commande d'allumage à au moins un dispositif de balisage suivant. A une étape 73, la fin d'une détection indique la fin d'un passage ou d'une présence. Puis à une étape 74, lorsque la détection est terminée, la fin de commande d'allumage de ladite source lumineuse est effectuée.

Dans les dispositifs de balisage selon des modes de réalisation de l'invention, la source lumineuse et les signaux optiques de communication peuvent être de mêmes longueurs d'onde ou de couleur. Cependant, ils peuvent aussi être de longueurs d'onde différentes, par exemple de couleur blanche, rouge, verte, jaune ou bleu, pour la source lumineuse et infrarouge pour les signaux de communication optiques ou lumineux.

Les dispositifs décrits ci-dessus peuvent aussi avoir en supplément des moyens de communication filaires ou par courants porteurs pour fonctionner par exemple en redondance avec des moyens de communication optique. Par exemple, lorsque des dispositifs de balisage comportent des sources d'alimentation autonome telles que des batteries, les dispositifs peuvent fonctionner en communication optique et filaire en fonctionnement normal et en fonctionnement optique et autonome si la fourniture de courant électrique est interrompue.

Des dispositifs de balisage peuvent communiquer entre eux par voie optique, un regroupement des informations pouvant se faire sur un dispositif de balisage qui reçoit des commandes et/ou renvoie des informations vers un centralisateur. La liaison vers un centralisateur peut se faire par vois optique ou par voie filaire.

## Revendications

1. Dispositif de balisage comportant une source lumineuse (10) et un circuit de traitement (11) pour commander l'éclairage de ladite source lumineuse,
**caractérisé en ce qu'**il comporte :
- des moyens de communication optique (20, 21, 22, 23, 61, 63) ayant au moins un émetteur optique (20, 21), et
- des moyens de détection (25) pour détecter la présence, le déplacement ou le passage d'un objet (42, 52), ledit dispositif de détection étant connecté au circuit de traitement pour commander les moyens de communication optique (20, 21) en fonction de signaux fournis par lesdits moyens de détection,
ledit au moins un émetteur optique (20, 21) émettant un signal optique (30) de commande d'éclairage vers un autre dispositif de balisage lorsqu'un signal de détection est fournit audit circuit de traitement.

2. Dispositif de balisage selon la revendication 1 **caractérisé en ce que** les moyens de communication comportent un récepteur optique (22, 23) pour recevoir un signal (31) de commande d'éclairage émis par un autre dispositif de balisage.

3. Dispositif de balisage selon l'une des revendications 1 ou 2 **caractérisé en ce que** les moyens de détection (25) comportent un photo-détecteur ou une diode réceptrice pour détecter un signal lumineux (16) de réflexion d'une lumière (15) émise par la source lumineuse (10).

4. Dispositif de balisage selon l'une quelconque des revendications 1 à 3 **caractérisé en ce que** les moyens de communication optiques comportent des récepteurs optiques (22, 23) et des moyens de filtrage (34, 35) et/ou des moyens de codage (32, 33, 61, 63) de codage pour filtrer et/ou coder des signaux (30, 31) de communication optique.

5. Dispositif de balisage selon l'une quelconque des revendications 1 à 4 **caractérisé en ce que** la source lumineuse (10) comporte des diodes électroluminescentes pour l'éclairage du dispositif de balisage, les moyens de détection détectant un signal (16) de réflexion d'une lumière (15) émise par les diodes électroluminescentes (10), le circuit de traitement effectuant un codage de la source lumineuse et/ou une reconnaissance de signaux représentatifs de signaux lumineux (16) reçus par les moyens de détection (25).

6. Dispositif de balisage selon l'une quelconque des revendications 1 à 5 **caractérisé en ce que** la source lumineuse (10) comporte des diodes électroluminescentes (10A) émettant dans une première couleur et des diodes électroluminescentes (10B, 10C) émettant dans une seconde couleur pour modifier la couleur de la lumière (15) de ladite source lumineuse (10).

7. Dispositif de balisage selon l'une quelconque des revendications 1 à 6 **caractérisé en ce qu'**il comporte des diodes électroluminescentes (10) connectées à des moyens de modulation (37) pour émettre des signaux de communication optique (30) vers d'autres dispositifs de balisage, lesdites diodes électroluminescentes émettant de la lumière de balisage en tant que source lumineuse (15) et des signaux optiques de communication (30).

8. Dispositif de balisage selon l'une quelconque des revendications 1 à 7 **caractérisé en ce que** le circuit de traitement (11) comporte des moyens (62) d'évaluation de vitesse d'un objet entre deux dispositifs de balisage.

9. Dispositif de balisage selon l'une quelconque des revendications 1 à 8 **caractérisé en ce que** le circuit de traitement (11) comporte des moyens (64) d'évaluation de distance entre deux objets détectés par des dispositifs de balisage.

10. Dispositif de balisage selon l'une quelconque des revendications 1 à 9 **caractérisé en ce que** le circuit de traitement (11) traite des informations des moyens de détection (25) et centralise des informations reçus par les moyens de communication optiques.

11. Dispositif de balisage selon l'une quelconque des revendications 1 à 10 **caractérisé en ce que** le circuit de traitement (11) traite des informations des moyens de détection et commande les moyens de communication (38, 39, 32, 33, 61) pour émettre des signaux optiques (30) de commande d'allumage d'au moins un autre dispositif de balisage lorsqu'il y a une détection.

12. Dispositif de balisage selon l'une quelconque des revendications 1 à 11 **caractérisé en ce que** le circuit de traitement (11) comportent des moyens de transfert (65, 66) pour recevoir des premiers signaux de communication optiques depuis un premier autre dispositif de balisage et envoyer des informations contenues dans les signaux reçus à un second autre dispositif de balisage par une communication optique.

13. Dispositif de balisage selon l'une quelconque des revendications 1 à 12 **caractérisé en ce que** le circuit de traitement (11) traite des informations de signaux reçus (31) par les moyens de communication optiques et commande l'allumage de la source lumineuse (10) si lesdits signaux comportent des informations de commande de la source lumineuse.

14. Dispositif de balisage selon l'une quelconque des revendications 1 à 13 **caractérisé en ce que** le circuit de traitement (11) commande l'arrêt de l'allumage de la source lumineuse (10) après la fin de détection par les moyens de détection.

15. Dispositif de balisage selon l'une quelconque des revendications 1 à 14 **caractérisé en ce qu'**il comporte une source d'énergie autonome (36).

16. Dispositif de balisage selon l'une quelconque des revendications 1 à 15 **caractérisé en ce qu'**il comporte des moyens de commande d'un actionneur (48).

17. Dispositif de balisage selon l'une quelconque des revendications 1 à 16 **caractérisé en ce qu'**il comporte au moins un capteur d'environnement (49).

18. Installation de balisage pour aéroport ou aérodrome comportant au moins deux dispositifs de balisage disposés sur un tronçon de piste (41) pour le guidage d'appareils (42) **caractérisé en ce qu'**elle comporte des dispositifs de balisage (40A-40E) selon l'une quelconque des revendications 1 à 17 communiquant par voie optique, les moyens de détection (25) desdits dispositifs de balisage étant aptes à détecter des aéronefs (42).

19. Installation de balisage selon la revendication 18 **caractérisé en ce qu'**au moins un dispositif de balisage (40A) détectant la présence d'un aéronef émet des signaux optiques (30) de commande à au moins un dispositif de balisage (40B) suivant pour commander l'allumage de la source lumineuse (10) d'au moins un dispositif de balisage suivant.

20. Installation de balisage pour circuit routier comportant au moins deux dispositifs de balisage disposés sur un tronçon (51) de route pour effectuer une signalisation routière **caractérisée en ce qu'**elle comporte des dispositifs de balisage (50, 50A, 50B) selon l'une quelconque des revendications 1 à 17 communiquant par voie optique, les moyens de détection (25) desdits dispositifs de balisage étant aptes à détecter des véhicules automobiles (52).

21. Installation de balisage selon la revendication 20 **caractérisé en ce qu'**au moins un dispositif de balisage (50A) détectant la présence ou le passage d'un véhicule émet des signaux optiques (30) de commande à au moins un dispositif de balisage (50B) suivant pour commander l'allumage de la source lumineuse (10) d'au moins un dispositif de balisage suivant.

22. Installation de balisage selon l'une des revendications 20 ou 21 **caractérisé en ce qu'**au moins un dispositif de balisage comporte un circuit de traitement (11) avec des moyens (62) d'évaluation de vitesse d'un véhicule entre deux dispositifs de balisage et fournit des signaux de détection de dépassement de vitesse si une valeur de vitesse évaluée dépasse une valeur limite de vitesse prédéterminée.

23. Installation de balisage selon l'une quelconque des revendications 20 à 22 **caractérisé en ce qu'**au moins un dispositif de balisage comporte un circuit de traitement (11) avec des moyens d'évaluation de distance (64) entre deux véhicules en fonction de signaux de détection fournis par ses moyens de détection et/ou en fonction de signaux de détection fournis par d'autres dispositifs de balisage et fournit des signaux de dépassement de distance si une valeur de distance évaluée dépasse une valeur limite de distance prédéterminée.

24. Installation de balisage selon l'une des revendications 22 ou 23 **caractérisé en ce qu'**au moins un dispositif de balisage comporte des moyens de commande de la source de lumière (10) pour un éclairement spécifique lorsque ledit dispositif de balisage détecte ou reçoit des signaux représentatifs de dépassent de vitesse ou de distance.

25. Installation de balisage selon l'une quelconque des revendications 20 à 24 **caractérisé en ce qu'**au moins un dispositif de balisage reçoit, émet et utilise dans son circuit de traitement (11) des signaux de sécurité, lesdits signaux de sécurité pouvant déclencher la commande de la source de lumière (10) pour un éclairement spécifique.

26. Procédé de balisage comportant :
- une étape (70) d'allumage d'une source lumineuse (10) commandée par la réception d'un signal lumineux (31) de commande émis par un dispositif de balisage précédant,
- une étape (71) de détection pour détecter le passage ou la présence d'un objet (42, 52) destiné à être détecté,
- une étape (72) de communication d'un signal lumineux (30) de détection ou de commande d'allumage à au moins un dispositif de balisage suivant, et
- une étape (74) de fin de commande d'allumage de ladite source lumineuse (10) lorsque la détection est terminée.
